# EUROPEAN PATENT APPLICATION

(11) **EP 2 367 340 A1**
(43) Date of publication of application: **21.09.2011**
(21) Application number: 10002853.9
(22) Date of filing: 18.03.2010
(51) Int. Cl.: H04M 1/05, H04M 1/60, H04M 1/02

(54) **Communication item**

(71) Applicant: novero GmbH, 40468 Düsseldorf (DE)
(72) Inventor: Hallwass, Joachim, 45739 Oer-Erkenschwick (DE)
(74) Representative: Gesthuysen, von Rohr & Eggert

(57) **Abstract**

The invention related to a communication item in the form of a pendant (1) on a mechanical carrier component in the form of a necklace (14) or a choker (14'). Communication module is integrated into the communication item. The communication module comprises at least a core element (8), an antenna (16), a speaker (17) and optionally a microphone (18). The pendant (1) comprises a housing (5) with at least the core element (8) of the communication module positioned in the housing (5). The housing (5) is provided with at least one mechanical interface (12) connecting the housing (5) to the necklace (14) or the choker (14'). The necklace (14) or the choker (14') in a front view defines a first branch (19) on one side of the pendant (1) and a second branch (20) on the opposite side of the pendant (1). The speaker (17) is positioned in one branch of the necklace (14) or the choker (14') and a lead wire (21) is integrated into the necklace (14) or the choker (14'), the lead wire (21) running from the speaker (17) through the mechanical interface (12) to the core element (8) in the housing (5). For actual use the speaker (17), while still connected to the lead wire (21), can be moved and put into or close to the ear of a user generally without moving the pendant (1). According to the invention the antenna (16) is formed by the lead wire (21) to the speaker (17). The lead wire (21) is electrically, in particular galvanically coupled on the one hand to a transmitter- and receiver-circuitry (22) of the core element (8) and on the other hand to an audio circuitry (23) of the core element (8).

## Description

The present invention relates to a communication item in the form of a pendant on a necklace or a choker with the features according to the preamble of claim 1.

In the prior art there is provided a communication and jewelry item in the form of a pendant on a necklace (US 2008/0161023 A1). The pendant has a housing comprising a front cover carrying a decorative jewelry component like a pearl and a rear cover connected to the front cover. An ear-plug extends outwardly from the rear surface of the rear cover. The jewelry component on the front cover usually faces away from the bearer while the rear cover with the ear-plug usually faces towards the bearer.

Inside the housing there is a core element of a communication module. The core element is provided with an integrated antenna. The housing has wall openings as access points for functional elements of the core element, i.e. volume control keys, a switch key, and indicating light as well as a power jack.

The necklace carrying the pendant has a first joining member attached to a first end of the necklace and a second joining member attached to the second end of the necklace. The two joining members together form the closure of the necklace. In the necklace a lead wire is disposed connecting the pendant to a microphone disposed in the second joining member of the closure.

The lead wire connects the microphone to the core element in the housing of the pendant. A speaker in the ear-plug on the rear cover of the pendant is electrically connected to the core element.

The necklace has a double function, first to carry the pendant around the neck of the bearer, second to connect the microphone in the closure to the core element.

The core element in the housing of the pendant is part of a communication module to send/receive short-range wireless signals, in particular in the Bluetooth standard.

Such an item can be worn on the neck naturally if no communication is intended. As the distance between the microphone and the ear-piece and the distance between mouth and ear of the bearer are almost the same, the device can be used for communication easily when the ear-plug is inserted into the ear.

The decorative component on the front cover of the housing can have any design. It can be a specific type of surface of the front cover also. Likewise, the necklace can be simple and basic, e.g. a leather string, or can be more sophisticated, e.g. decorated with pearls or other jewelry or costume jewelry elements.

A further prior art (WO-A1-2008/156693) discloses a wireless headset designed as an ear-ring or ear-piece with a decorative component like a jewelry component on a front face and the components of a wireless communication link in or on a housing of the ear-piece. This prior art contains extensive information about the components and the technology of such an item.

The prior art can be considered to be applicable with all kinds of short-range wireless communication standards (Bluetooth, Wi-Fi, IR etc.), and also with future standards still to be developed (see also Weyers: "Integrated Circuits for a WPAN System", Verlag Dr. Hut, Munich 2010, ISBN 978-3-86853-355-2).

A further prior art (JP-A-2004-180252) describes a decorative fitting for an ear-phone cord of a music player like an MP-3 player. In the actual embodiment shown in this prior art a chain of pearls is used on the lead wire from the plug of the ear-phone cord to the speakers.

In general, the teaching of the present invention is preferably applicable to a communication item with decorative elements. However, the invention is applicable also to a plain item without decorative elements.

As mentioned above, in the prior art forming the starting point of the invention the antenna of the wireless communication link is integrated into the core element. The core element is positioned in the housing of the pendant. So the housing of the pendant must be non-metallic in order to avoid electromagnetic shielding of the antenna.

Above mentioned situation means that the design of the pendant of the communication item is subject to restrictions. In particular in a pendant provided with a decorative component, i.e. a layer of precious metal, this will lead at least to severe restrictions of the communication capability of the communication item.

The object of the present invention is to improve the usability of a communication item in the form of a pendant on a necklace or a choker, in particular if this communication item is provided with a decorative component.

Above mentioned object is achieved by a communication item- comprising the features of the preamble of claim 1 together with the features of the characterizing part of claim 1.

For the purpose of this patent application a number of terms used are defined as follows:
A "jewelry item" includes true jewelry items as well as costume jewelry items and generally decorative items.

A jewelry item has at least two "components", namely a mechanical carrier component and a decorative component. A decorative component itself can have one element or a number of elements (e.g. a chain of pearls having a large number of pearls).

A "communication module" is understood as a short-range wireless communication item. Preferably, however not exclusively, this term refers to a Bluetooth module. Other types use e.g. Wi-Fi or IR communication links or other standards (see the prior art mentioned above).

The communication module comprises a number of components, e.g. a core element with a chipset (electronic circuitry), a microphone (frequently, but not necessarily integrated in the core element). A speaker (for mono applications) or two speakers can be integrated as well. Necessarily, the communication module comprises a battery pack, mostly rechargeable. The battery pack is frequently but not necessarily integrated into the core element. The core element also comprises user interface elements.

A "wireless personal communication system" comprises at least one communication module and at least one "base unit" remote from the communication module, in particular, but not exclusively a mobile phone or a personal digital assistant. The base unit is connected to the communication module by a "short-range wireless communication link" (Bluetooth, Wi-Fi, IR etc.; WPAN-system). A short-range wireless communication link typically permits communication up to a distance of 10 to 20 m.

An "access point" on the housing isn't necessarily an opening. It may also be a closed area of the housing if a contactless operation of a functional element is provided for.

A "necklace" is a mechanical carrier component that is closed around the neck of a user. A "choker" has a similar function as a necklace, but is an open structure with only one end being connected to the pendant while the other end is a free end. The speaker is positioned at the free end of the choker.

First of all, in contrast to the prior art, the speaker is positioned in one branch of the necklace or the choker. The lead wire is integrated into the necklace or the choker. The lead wire runs from the speaker through the mechanical interface to the core element in the housing of the pendant.

For actual use the speaker, while still connected to the lead wire, can be moved and put into or close to the ear of a user generally without moving the pendant. The pendant can remain where it usually is, namely below the user's chin. The use of the speaker of this communication item is very comfortable. Moreover, with the speaker at a distance from the housing of the pendant, the invention provides new design options for the pendant. In particular, the housing of the pendant may be made partly or completely of a metal material forming an electromagnetic shield for the electronics inside the housing. This possibility is given, because in the inventive communication item the antenna is formed by the lead wire to the speaker.

In order to give the lead wire to the speaker it's second function as an antenna for the short-range wireless communication link the lead wire is electrically, in particular galvanically coupled on the one hand to a transmitter- and receiver-circuitry of the core element and on the other hand to an audio circuitry of the core element.

So the communication item according to the invention has the antenna outside the housing of the pendant and the pendant may thus have any design including a metal housing. In particular, if the pendant is designed with a decorative, in particular a decorative jewelry component this gives further design options.

In general, as mentioned above, any type of short-range wireless communication link can be used. A particularly preferred embodiment of the invention uses the Bluetooth standard (2,4 GHz operating frequency).

If a Bluetooth wireless communication link is used the wave-length is around 12,5 cm (full wave). For the present invention then it is preferred that the length of the lead wire is defined to be approximately an integer multiple of the Bluetooth wave length, preferably the fivefold to sevenfold wave-length. This means a length of the lead wire between housing and speaker of 60 to 90 cm.

Generally it is advisable to decouple the audio circuitry from the high frequency for establishing the wireless communication link. To this end it may be provided that the lead wire is coupled to the audio circuitry through a high frequency decoupling circuitry or device. The simplest version of a high frequency decoupling circuitry is an audio frequency low pass filter.

Likewise, it is advisable to decouple the high frequency branch from the audio branch. To this end it is recommended that the lead wire is coupled to the transmitter- and receiver-circuitry through an audio frequency decoupling circuitry or device. In a preferred embodiment it is provided that the audio frequency decoupling circuitry or device is combined with or integrated into a central coupling unit.

Generally, a frequency splitter or the like will be a helpful circuitry or device to perform both above mentioned tasks. Such frequency splitter can be provided by the central coupling unit.

If the communication item is a choker the lead wire which normally has two lines (+/-) may run to the speaker as traditional flat cable, as a classical round cable with wires next to each other, or as a coaxial cable. If the mechanical carrier component is a traditional necklace, however, there is a second option, namely that the lead wire is split into two bodily separate branches with one branch running along the first branch of the necklace and the other branch running along the second branch of the necklace. Here the lead wire can be designed so that it has the characteristic of a loop antenna (Handbook of Antennas in Wireless Communications, CRS PRESS LLC, 2002, ISBN 0-8493-0124-6).

The general idea of the invention can be realized with a communication item with no specific decorative components, let alone any decorative jewelry component. However, it is a preferred version of the invention that combines a decorative component with the mechanical carrier component.

In a preferred embodiment of the invention the pendant comprises the housing and at least one decorative component which is separate from, but mechanically connected to a front side of the housing or is formed directly on the housing.

An additional idea of the invention is to split such a communication item into two basic components. On the one hand there is a probably custom-made component which includes the decorative component. On the other hand, the electronic parts of the communication item can be manufactured in mass production at a low price.

The present invention may be used with a technical architecture with a platform that is designed in a way to provide dedicated interfaces between the technical components on the one hand and the decorative components on the other hand.

The decorative component follows the rules of jewelry production or, in a more decorative part, of costume jewelry items or generally decorative items. All or at least the major components of the communication module, however, are manufactured in high volume independent of any variance or style.

The inventive platform technology allows a late assembly of the communication module on the one hand and the jewelry on the other hand.

In a further preferred version of the invention also the necklace or the choker comprises a mechanical carrier component, preferably in the form of a suspension strand, and preferably a decorative component, preferably on the mechanical carrier component.

Finally, in a further version of the invention the speaker is constructed as or provided with a decorative component.

Usually, the housing will have a rear cover and a front cover with the core element of the communication module being fixed between the covers. The housing will be provided with mechanical interfaces for connecting to other components of the item. Of course, the item also needs electrical interfaces at the appropriate locations.

It depends on the specific type of the item whether integrating a microphone of the communication module into the core element or at least positioning this microphone in the housing is a feasible construction under communication aspects.

In a preferred embodiment of the invention with a necklace the housing is provided with a first mechanical interface providing a generally fixed connection to one end of the necklace and with a second mechanical interface providing a detachable connection to the other end of the necklace. The closure of the necklace is here preferably not at the neck but at the pendant, in particular and preferably by a magnetic joint forming the detachable connection.

The term "generally fixed" means that the connection is not detachable in day to day use of the item. It should be possible, however, to open this connection for service or repair, in particular using an appropriate tool. The term "detachable" connection means that the user may open this connection easily, in particular without a specific tool.

Up to now the communication item was discussed in view of a construction with only one speaker (mono-equipment). However, the invention can be realized also for a stereo-equipment. Then there is provided a speaker in each of the two branches of the necklace or choker. A similar construction for the second speaker as for the first speaker is available. However, probably only one lead wire to one of the speakers will be designed as antenna for the wireless communication link.

Now, preferred embodiments of the invention are described with reference to the drawings. In the drawings
- Fig. 1: shows a schematic view of a communication item in the form of a pendant on a necklace,
- Fig. 2: shows an enlarged perspective view of the pendant of Fig. 1,
- Fig. 3: shows the first cover and the decorative component of the pendant according to Fig. 2,
- Fig. 4: shows the core element of the communication module of the item of Fig. 1,
- Fig. 5: shows the rear cover of the housing of the pendant according to Fig. 2,
- Fig. 6: shows a block diagram of the circuitry of the communication module used in the communication item of Fig. 1,
- Fig. 7: shows a schematic view of a communication item in the form of a pendant on a necklace similar to Fig. 1 with a two branch lead wire,
- Fig. 8: shows in a schematic view similar to Fig. 1 a communication item in the form of a pendant on a choker.

The invention relates to communication item as explained in the introductory part of the description. Also, the definitions in the introductory part of the description shall apply throughout the complete patent application.

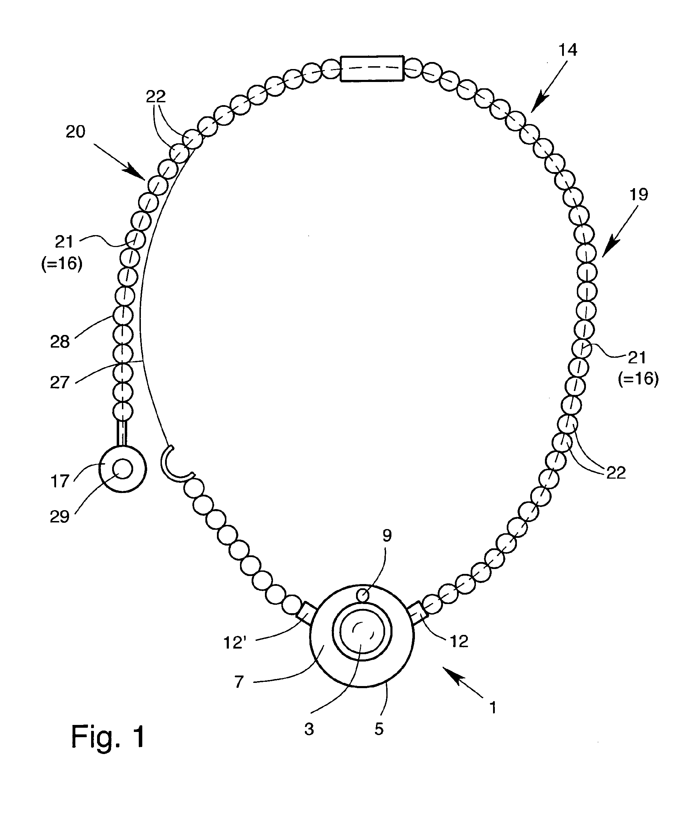

Fig. 1 to 5 show a first embodiment of an inventive item with all its components.

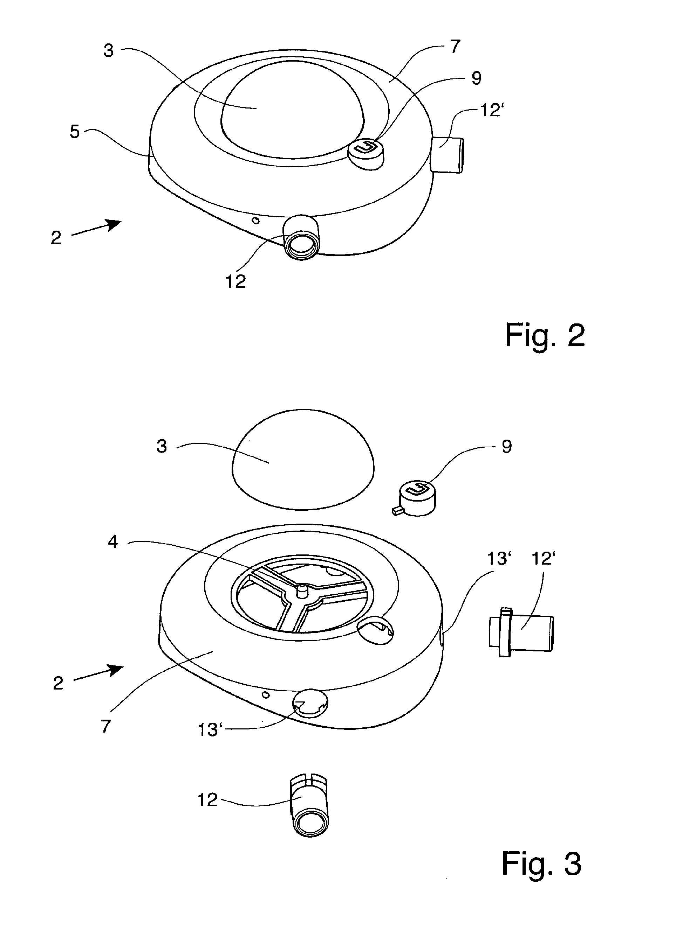

The pendant 1 in the first embodiment comprises at least two components. There is at least one mechanical carrier component 2 and at least one decorative component 3. In Fig. 3 the different components can be seen in a kind of explosion view.

The decorative component 3 is separate from the mechanical carrier component 2, but is normally mechanically connected to the mechanical carrier component 2. In Fig. 3 a connecting pin 4 can be seen on the mechanical carrier component 2 which serves to connect the decorative component 3, here a half pearl, to the mechanical carrier component 2.

In an alternative version the decorative component 3 can also be formed directly on a front face of the mechanical carrier component 2.

Here the mechanical carrier component 2 comprises a housing 5 formed by a rear cover 6 and a front cover 7 attached to the rear cover 6.

In the embodiment of Fig. 1-5 the decorative component 3, namely a half pearl, is separate from, but mechanically connected to the front cover 7 of the housing 5. The connecting pin 4 is positioned in the middle of the front cover 7.

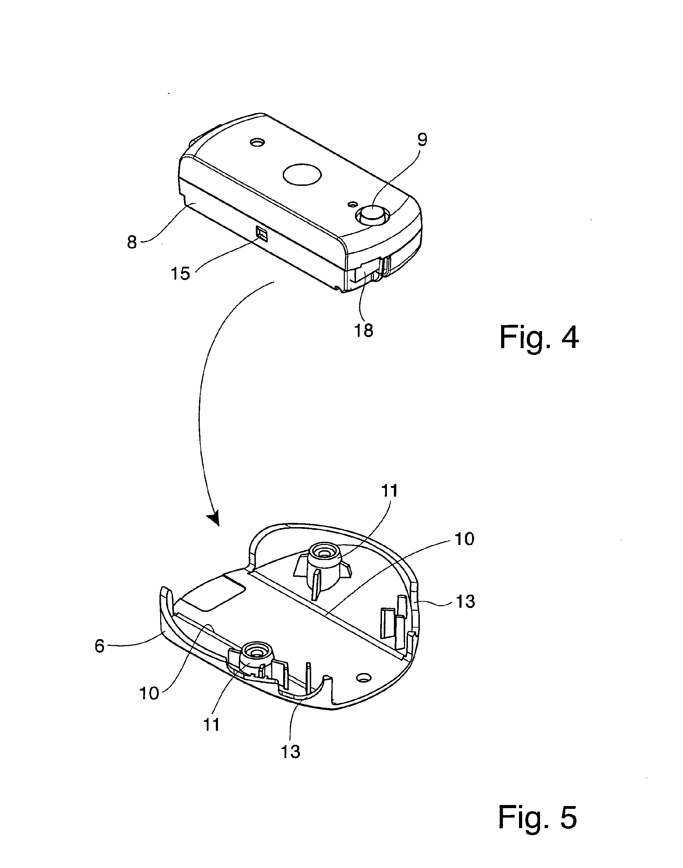

From Fig. 2 to 5 it can be obtained that the decorative jewelry component 3 is separate from, but mechanically connected to the front cover 7 or is formed directly on the front cover 7, and a communication module or at least a major component of a communication module is integrated into the pendant 1. To this end there is fixedly positioned in the housing 5 at least a core element 8 of the communication module. The arrow in Fig. 4 to Fig. 5 indicates where the core element 8 is seated in the rear cover 6.

In the introductory part of the description the core element 8 was defined. This core element 8 has its own housing and in the housing a chip-set for the electronics of the communication module. Such a core element 8 is a mass production standard item. A typical Bluetooth core element 8 will have a length of about 40 mm, a width of about 18 mm and a height of about 11 mm. Future Bluetooth core elements 8 will have smaller dimensions. The core element 8 is the "heart" of the communication module. It establishes the short-range wireless communication link based on a typical standard like Bluetooth, Wi-Fi, IR or the like (see the prior art mentioned above).

The housing 5 further has a number of access points to provide access to functional elements 9 of the core element 8. Those functional elements 9 are e.g. an on/off button or multi function button, a volume button, an indicator light and a power jack for recharging the battery in the core element 8.

Fig. 1 to 3 show the access point for functional element 9 (on/off button) - here designed as a decorative part on the front cover 7.

Fig. 5 shows a perspective view of the rear cover 6. It is provided with fixation means 10 for positioning the core element 8 in the housing 5. The fixation means 10 here are forms, namely side rails, on the internal surface of the rear cover 6 of the housing 5. It can be seen that the housing of the core element 8 fits exactly between the fixation means 10. Similar fixation means may be provided on the internal surface of the front cover 7.

Fig. 5 also shows bosses 11 on the rear cover 6 where mounting screws can be positioned to connect the front cover 7 to the rear cover 6.

The core element 8 as the heart of the communication module may be a standard element. Other components of the communication module should be standard components also, e.g. the microphone, the speaker, the battery pack and usual interface elements.

In the preferred version of the embodiment of Fig. 1 to 5 the rear cover 6 and/or the front cover 7 of the housing 5 is/are provided with mechanical interfaces 12, 12' for connecting the housing 5 to other components of the item 1. In Fig. 5 parts of the mechanical interfaces 12, 12' can be seen on the rear cover 6 in the form of openings 13 at the sides of the rear cover 6. In Fig. 3 similar openings 13' aligned with the openings 13 in the rear cover 6 can be seen on the front cover 7.

Fig. 1 of the drawings shows a necklace 14 provided separate from the housing 5 with the housing 5 being mechanically connected to, however preferably detachable from the necklace 14. The necklace 14 allows to place the pendant 1 with its housing 5 in the suitable position around the neck of a bearer.

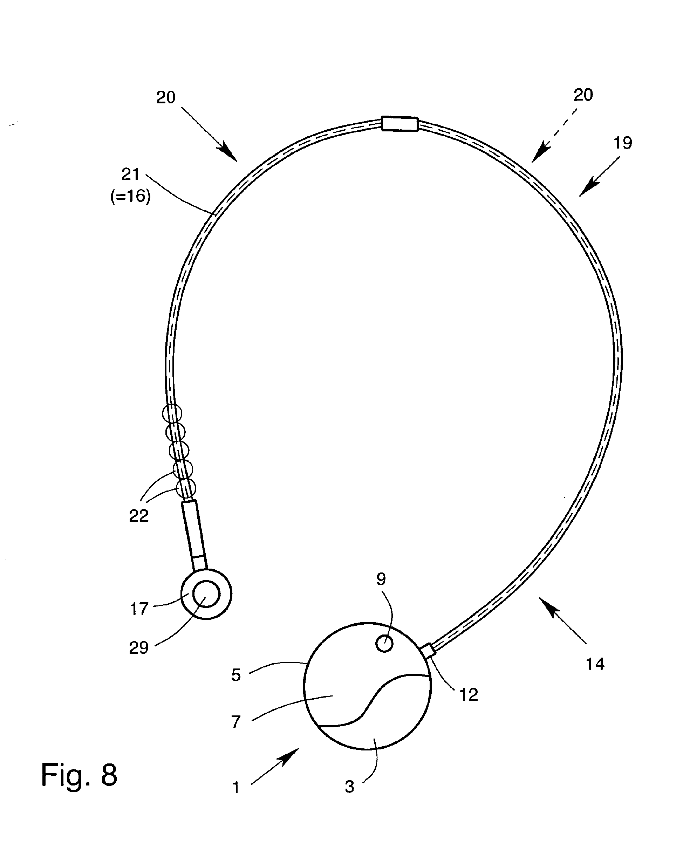

Fig. 8 shows in a drawing similar to Fig. 1 the version of the communication item with the mechanical carrier component in the form of a choker 14'. The specific design of the choker 14' is that of an "open" necklace with the second end of the choker 14' being a free end. Only one end of the choker 14' is connected to the housing 5 of pendant 1. This will be explained in detail later.

In both cases, with a necklace 14 or a choker 14', an antenna 16 is provided that is connected to the core element 8 and is used to establish the short-range wireless communication link in the appropriate communication standard.

As can be seen in Fig. 4 of the drawings the core element 8 is provided with an electrical interface 15 for connecting to an antenna 16 and a speaker 17. In the embodiment of Fig. 1 to 5 the microphone 18 is integrated in the core element 8 (Fig. 4).

In the present invention a battery pack is integrated into the core element 8. However, it can also be separate from the core element 8.

In Fig. 1 the speaker 17 can be seen on the necklace 14. A typical overall length of a necklace 14 is around 70 to 100 cm with the distance between housing 5 and speaker 17 being around 60 to 80 cm.

Fig. 1 to 5 show a first embodiment of the invention with one speaker 17.

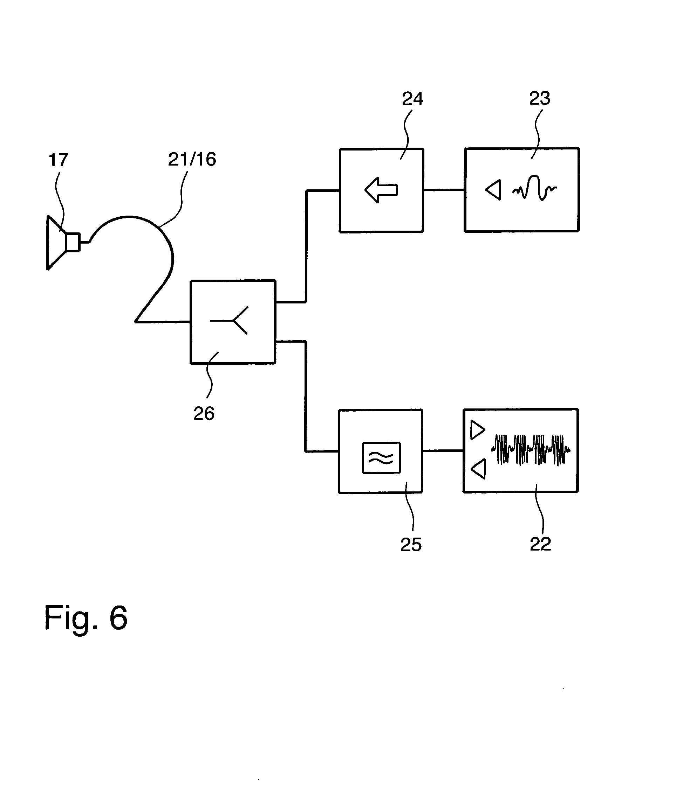

As said, the housing 5 is provided with at least one mechanical interface connecting the housing 5 to the necklace 14. The necklace 14, as seen in a front view, defines a first branch 19 on the right side of the pendant 1 in Fig. 1 and 6 and a second branch 20 on the left side of the pendant 1 in Fig. 1.

The drawing shows that in the inventive communication item which is not necessarily a communication jewelry item, the speaker 17 is positioned in the second branch 20 of the necklace 14. A lead wire 21 is integrated into the necklace 14. The lead wire 21 runs from the speaker 17 through the mechanical interface 12 to the core element 8 in the housing 5.

For actual use the speaker 17 which is still connected to the lead wire 21 can be moved and put into or close to the ear of a user generally without moving the pendant 1.

The above mentioned concept is comfortable for the user. The pendant 1 can remain where it is and this is a position where a microphone 18 within the housing 5 is well placed relative to the mouth of the user. Nevertheless, the speaker 17 can be comfortably moved from a rest position to the use position in or at the ear of the user.

In the preferred embodiment of the invention according to Fig. 1-6 the antenna 16 is formed by the lead wire 21 to the speaker 17. The lead wire 21 is electrically, in particular galvanically coupled to a transmitter- and receiver-circuitry 22 of the core element 8 and to an audio circuitry 23 of the core element 8. Thus the antenna 16 is located outside the housing 5 of the pendant 1.

There is no design restriction for the housing 5, in particular it may be made of metal forming an effective electromagnetic shield for the electromagnetic waves of the wireless communication link.

Fig. 6 shows a block diagram of the circuitry of a preferred embodiment of the invention. Generally, for the terms used here please also refer to the introductory part of the description.

The circuitry of the communication item comprises a transmitter- and receiver-circuitry 22 to establish the wireless communication link. In particular this circuitry 22 is a Bluetooth radio frequency transceiver.

Apart from the circuitry 22 the communication item comprises an audio circuitry 23 which is mainly an audio amplifier stage. The audio circuitry 23 is coupled to the lead wire 21 which forms the antenna 16 of the communication item through a high frequency decoupling circuitry or device 24. Circuitry means a design with a number of electronic components whereas a device may also be only one single electronic component.

Preferably the high frequency decoupling circuitry or device 24 is an audio frequency low pass filter or a frequency splitter with a similar characteristic.

On the side of the transmitter- and receiver-circuitry 22 there is an impedance matching unit 25 for coupling to the antenna 16. The impedance matching unit 25 is helpful for the appropriate radio energy coupling between the transmitter- and receiver-circuitry 22 on the one hand and the antenna 16 on the other hand. Decoupling of the audio circuitry 23 is provided to prevent radio frequency energy leakage to the audio circuitry 23 of the device.

Likewise, the high frequency circuitry, the transmitter- and receiver-circuitry 22, is decoupled from the audio circuitry 23. To this end it is provided that the lead wire 21 is coupled to the transmitter- and receiver-circuitry 22 through an audio frequency decoupling circuitry or device.

The lead wire 21 to the speaker 17 which simultaneously forms the antenna 16 is connected to the circuitry by means of a central coupling unit 26. In the present embodiment it is provided that the audio frequency decoupling circuitry or device is combined with or integrated into the central coupling unit 26.

In the present embodiment according to Fig. 6 the central coupling unit 26 may provide both decoupling functions mentioned above. It may be designed as an appropriate frequency splitter.

As said, the core element 8 preferably comprises a Bluetooth transmitter- and receiver-circuitry 22. However, the idea of the invention is applicable with many other standards for wireless communication, too.

As the Bluetooth frequency is around 2,4 GHz with a wave-length of about 12,5 cm, above mentioned examples for the length of a necklace 14 coincide properly with the fivefold to sevenfold wave-length for Bluetooth.

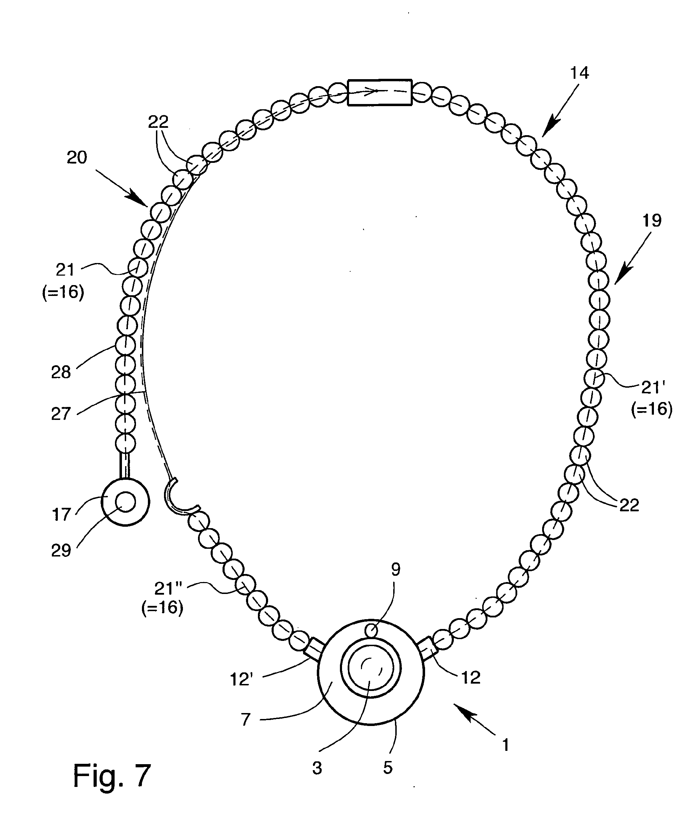

In Fig. 7 a modified embodiment of the invention with a necklace 14 as mechanical carrier component of the communication item is shown. Here it is provided that the lead wire 21 is split into two bodily separate branches 21', 21" with one branch 21' running along the first branch 19 of the necklace 14 and the other branch 21" running along the second branch 20 of the necklace 14. With this construction the lead wire 21 with its two branches 21', 21" can be designed to form a kind of loop-antenna (see the prior art mentioned above).

In Fig. 8 of the drawings a second embodiment of the invention with the mechanical carrier component in the form of a choker 14' is disclosed. Here the speaker 17 of the communication module is positioned at the free end of the choker 14' with the lead wire 21 integrated into the choker 14. There is only one mechanical interface 12 on the housing 5 of the pendant 1 as a generally fixed connection to the end of the choker 14'.

The lead wire 21 in Fig. 8 is integrated into the mechanical structure of the choker 14'. This mechanical structure of the choker 14' has a semi-stiff halfring as the first branch 19 extending from the mechanical interface 12 to a kind of fake closure opposite the pendant, and a more flexible line as the second branch 20 leading to the free end with the speaker 17. Due to the specific design the choker 14' will still remain safely positioned around the neck of the bearer even if the speaker 17 is put to the ear of the user.

As far as the antenna 16 provided by the lead wire 21 is concerned, the embodiment of Fig. 8 is constructed similar to the embodiment of Fig. 1.

Above it was already explained that the communication item according to the invention can be modified to be a communication decorative or jewelry item. So the pendant 1 may be decorated with a decorative component 3.

In the present embodiment it is further provided that the necklace 14 comprises a mechanical carrier component 27, preferably in the form of a suspension strand, and preferably a decorative component 28, preferably on the mechanical carrier component 27. Here, the decorative component 28 is a chain of pearls on the suspension strand 27 of the necklace 14. A similar design can be used for the choker 14'.

As far as the electronic design is concerned it can be provided here that the mechanical carrier component 27 of the necklace 14 is a metallic item with appropriate impedance adapted to the impedance of the antenna 16. As the metallic suspension strand 27 is somehow electromagnetically coupled to the antenna 16 formed by the lead wire 21, an impedance match is advisable.

As explained in the introductory part of the description a necklace can also be designed with two speakers for stereo hearing to provide a stereo headset.

Further, in the present embodiment the speaker 17 itself has a decorative component 29 on its front face. So an ear-plug or ear-clip or the like is on the rear of the speaker 17.

The microphone 18 of the communication module is in the present invention preferably positioned in the housing 5. This is the "natural" location of the microphone 18. However, it is technically possible to place the optional microphone 18 at other locations, e.g. somewhere on the necklace 14 or at a separate place connected via short-range wireless communication.

The present patent application is one of the following related applications:
- EP .......... "System of jewelry items"
   Attorney-reference; 09.0478.2
- EP .......... "Hand wearable controller for a remotely located electronic device"
   Attorney-reference: 10.0019.2
- EP .......... "Communication item"
   Attorney-reference: 10.0020.2
- EP .......... "Communication item as a pendant on a choker"
   Attorney-reference: 10.0084.2
- EP .......... "Communication item as a pendant on a necklace"
   Attorney-reference 10.0085.2
- EP .......... "Wireless audio headset with an ear-piece"
   Attorney reference 10.0086.2

## Claims

1. Communication item in the form of a pendant (1) on a mechanical carrier component in the form of a necklace (14) or a choker (14'),
wherein a communication module is integrated into the communication item, wherein the communication module comprises at least a core element (8), an antenna (16), a speaker (17) and optionally a microphone (18),
wherein the pendant (1) comprises a housing (5) with at least the core element (8) of the communication module positioned in the housing (5),
wherein the housing (5) is provided with at least one mechanical interface (12) connecting the housing (5) to the necklace (14) or the choker (14'),
wherein the necklace (14) or the choker (14') in a front view defines a first branch (19) on one side of the pendant (1) and a second branch (20) on the opposite side of the pendant (1),
**characterized in that**
the speaker (17) is positioned in one branch of the necklace (14) or the choker (14') and a lead wire (21) is integrated into the necklace (14) or the choker (14'), the lead wire (21) running from the speaker (17) through the mechanical interface (12) to the core element (8) in the housing (5),
for actual use the speaker (17), while still connected to the lead wire (21), can be moved and put into or close to the ear of a user generally without moving the pendant (1),
the antenna (16) is formed by the lead wire (21) to the speaker (17),
the lead wire (21) is electrically, in particular galvanically coupled on the one hand to a transmitter- and receiver-circuitry (22) of the core element (8) and on the other hand to an audio circuitry (23) of the core element (8).

2. Communication item according to claim 1, **characterized in that** the lead wire (21) is coupled to the audio circuitry (23) through a high frequency decoupling circuitry or device (24).

3. Communication item according to claim 2, **characterized in that** the high frequency decoupling circuitry or device (24) is an audio frequency low pass filter.

4. Communication item according to any one of the preceding claims, **characterized in that**
the lead wire (21) is coupled to the transmitter- and receiver-circuitry (22) through an audio frequency decoupling circuitry or device.

5. Communication item according to claim 4, **characterized in that** the audio frequency decoupling circuitry or device is combined with or integrated into a central coupling unit (26).

6. Communication item according to claims 2 or 3 and claim 5, **characterized in that**,
the central coupling unit (26) comprises a frequency splitter for high frequency decoupling and audio frequency decoupling.

7. Communication item according to any one of the preceding claims, **characterized in that**
the housing (5) of the pendant (1) is of a metal construction forming an effective electromagnetic shield.

8. Communication item according to any one of the preceding claims, **characterized in that**
the core element (8) comprises a Bluetooth transmitter- and receiver-circuitry (22).

9. Communication item according to claim 8, **characterized in that** the length of the lead wire (21) is defined to be approximately an integer multiple of the Bluetooth wave-length, preferably the fivefold to sevenfold wave-length.

10. Communication item according to any one of the preceding claims, **characterized in that**
the mechanical carrier component is a necklace (14) and the lead wire (21) is split into two bodily separate branches (21', 21") with one branch (21') running along the first branch (19) of the necklace (14) and the other branch (21") running along the second branch (20) of the necklace (14).

11. Communication item according any one of the preceding claims, **characterized in that**
the pendant (1) comprises the housing (5) and at least one decorative component (3) which is separate from, but mechanically connected to a front side of the housing (5) or is formed directly on the housing (5).

12. Communication item according to any one of the preceding claims, **characterized in that**
the necklace (14) or the choker (14') comprises a mechanical carrier component (27), preferably in the form of a suspension strand, and preferably a decorative component (28), preferably on the mechanical carrier component (27).

13. Communication item according to any one of the preceding claims, **characterized in that**
the speaker (17) is constructed as or provided with a decorative component (29).

14. Communication item according to any one of the preceding claims, **characterized in that**
the necklace (14) has a speaker in each of the two branches (18, 19).

## Amended claims

### Amended claims in accordance with Rule 137(2) EPC.

**1.** Communication item in the form of a pendant (1) on a mechanical carrier component in the form of a necklace (14) or a choker (14'),
wherein a communication module is integrated into the communication item, wherein the communication module comprises at least a core element (8), an antenna (16), a speaker (17) and optionally a microphone (18),
wherein the pendant (1) comprises a housing (5) with at least the core element (8) of the communication module positioned in the housing (5),
wherein the housing (5) is provided with at least one mechanical interface (12) connecting the housing (5) to the necklace (14) or the choker (14'),
wherein the necklace (14) or the choker (14') in a front view defines a first branch (19) on one side of the pendant (1) and a second branch (20) on the opposite side of the pendant (1),
the speaker (17) is positioned in one branch of the necklace (14) or the choker (14') and a lead wire (21) is integrated into the necklace (14) or the choker (14'), the lead wire (21) is running from the speaker (17) through the mechanical interface (12) to the core element (8) in the housing (5), and is electrically, in particular galvanically, coupled to an audio circuitry (23) of the core element (8), and for actual use the speaker (17), while still connected to the lead wire (21), can be moved and put into or close to the ear of a user generally without moving the pendant(1),
**characterized in that**
the antenna (16) is formed by the lead wire (21) to the speaker (17) and
the lead wire (21) is electrically, in particular galvanically, coupled also to a transmitter- and receiver-circuitry (22) of the core element (8).
